# DEMANDE DE BREVET EUROPEEN

(11) **EP 0 677 945 A1**
(43) Date de publication de la demande: **18.10.1995**
(21) Numéro de dépôt: 95400796.9
(22) Date de dépôt: 10.04.1995
(51) Int. Cl.: H04M 1/72, H04N 1/00

(54) **Système de télécopie à communication sans fil**

(30) Priorité: 14.04.1994 FR 9404444
(71) Demandeur: SOCIETE D'APPLICATIONS GENERALES D'ELECTRICITE ET DE MECANIQUE SAGEM Société anonyme française, F-75783 Paris Cédex 16 (FR)
(72) Inventeur: Charbonnier, Philippe, F-78600 Maisons-Laffitte (FR); Carriou, Jean-René, F-95000 Cergy (FR)
(74) Mandataire: Bloch, Gérard

(57) **Abrégé**

Le système comprend un processeur, un bloc d'aiguillage (3), relié au processeur, pour être relié à une ligne (10) d'un réseau téléphonique (11) et à un combiné téléphonique associé (12), un modem (4), relié au processeur et au bloc d'aiguillage (3), un ensemble d'analyse et d'impression et un pupitre de commande, reliés au processeur. Il comporte aussi un module radio réversible (2), relié au bloc d'aiguillage (3) et au processeur pour communiquer par liaison sans fil soit, en mode combiné, avec une base de téléphonie sans fil reliée à la ligne téléphonique, le combiné associé étant relié au bloc d'aiguillage (3), soit, en mode base, avec le combiné associé (12), le bloc d'aiguillage (3) étant alors relié à la ligne téléphonique (10).

## Description

Le domaine de l'invention est celui des systèmes de "téléphone sans fil" et des télécopieurs.

Un système de "téléphone sans fil", ou téléphone sans fil, comporte une base de téléphonie sans fil, reliée à une ligne d'un réseau téléphonique, comme le réseau téléphonique commuté RTC, et un combiné téléphonique pouvant communiquer avec la base par une liaison sans fil, généralement une liaison radio.

Un télécopieur est un appareil relié à une ligne téléphonique et comportant, d'une part, un combiné téléphonique et, d'autre part, un ensemble d'analyse et d'impression pouvant être reliés à la ligne. Une juxtaposition d'un téléphone sans fil et d'un télécopieur a déjà été proposée, avec une base et un ensemble d'analyse et d'impression, pouvant être reliés à la ligne, et un combiné téléphonique pouvant communiquer avec la base par une liaison sans fil.

La présente invention propose un système combinant, à la fois, la télécopie, la téléphonie et la communication sans fil.

La présente invention concerne un système de télécopie, comprenant un processeur, un bloc d'aiguillage, relié au processeur et agencé pour être relié à une ligne d'un réseau téléphonique et à un combiné téléphonique associé, un modem, relié au processeur et au bloc d'aiguillage, un ensemble d'analyse et d'impression et un pupitre de commande, reliés au processeur, caractérisé par le fait qu'il comporte un module radio réversible, relié au bloc d'aiguillage et au processeur et agencé pour communiquer par liaison sans fil soit, en mode combiné, avec une base de téléphonie sans fil reliée à la ligne téléphonique, le combiné associé étant relié au bloc d'aiguillage, soit, en mode base, avec le combiné associé, le bloc d'aiguillage étant alors relié à la ligne téléphonique.

Le système de télécopie de l'invention est doublement remarquable. Il s'agit d'un télécopieur sans fil et de surcroît, à caractère, ou mode, réversible, ou bimode. Il peut, en liaison avec une base, être utilisé comme un combiné de téléphone sans fil ; il peut aussi faire fonction de base pour le combiné associé, un autre combiné téléphonique ou un autre système de télécopie de l'invention agencé en combiné sans fil.

L'invention présente de multiples avantages, associant notamment ceux d'un téléphone sans fil et d'un télécopieur juxtaposé à un téléphone sans fil. L'installation du système est particulièrement simple et, en mode combiné, d'une très grande souplesse.

En mode combiné, le bloc d'aiguillage peut relier le module radio au modem ou au combiné téléphonique associé.

En mode base, le bloc d'aiguillage peut relier la ligne téléphonique soit au module radio, pour assurer avec le processeur la fonction téléphonie d'une base sans fil pour le combiné associé, soit au modem, pour assurer la fonction télécopie.

Le module radio peut comporter deux générateurs de fréquence et le processeur être agencé pour, sous la commande du pupitre, faire fonctionner l'un quelconque des deux générateurs en émission, et l'autre, en réception, le système pouvant ainsi globalement mettre en oeuvre un protocole de signalisation de la norme CT0.

Le module radio peut aussi ne comporter qu'un seul générateur de fréquence et le processeur être agencé pour, sous la commande du pupitre, faire fonctionner le générateur, en émission, sur un canal temporel et, en réception, sur un autre canal, le système pouvant ainsi globalement mettre en oeuvre un protocole de signalisation de la norme CT2.

Le processeur peut être agencé pour permettre, en mode combiné, la scrutation d'une pluralité de bases de téléphonie sans fil et, en mode base, la scrutation d'une pluralité de combinés sans fil.

L'invention sera mieux comprise à l'aide de la description suivante de la forme de réalisation préférée du système de l'invention, en référence au dessin annexé, sur lequel
- la figure 1 est une représentation structurelle schématique du système ;
- la figure 2 est une représentation de la tête radio du système, en mode base et
- la figure 3 est une représentation de la tête radio du système, en mode combiné.

Le système de télécopie comprend un processeur 1 et, reliés à lui, un module émetteur-récepteur radio 2, un bloc d'aiguillage 3, un modem 4, un module d'analyse 5, un module d'impression 6 et un pupitre de commande 7. Le module radio 2 est aussi relié à une antenne 8 et au bloc d'aiguillage 3. Le bloc d'aiguillage 3 est également relié au modem 4.

Le module radio 2 est réversible. Quand le système est utilisé comme un combiné de téléphone sans fil, c'est-à-dire quand il est utilisé en mode combiné, le module radio 2 peut communiquer avec une base d'un téléphone sans fil. Quand le système est utilisé comme une base d'un téléphone sans fil, c'est-à-dire quand il est utilisé en mode base, le module radio 2 peut communiquer avec un combiné téléphonique associé, un autre combiné téléphonique sans fil ou encore un autre système de télécopie similaire.

En mode combiné (figure 3), le système est un télécopieur sans fil, avec un poste téléphonique associé 9 relié au bloc d'aiguillage 3, pouvant être relié à une ligne d'un réseau téléphonique par l'intermédiaire du module radio 2, de l'antenne 8 et d'une base de téléphonie sans fil reliée à la ligne.

Par l'intermédiaire du processeur 1 et du bloc d'aiguillage 3, on peut relier le module radio 2 soit au modem 4, soit au poste associé 9, par un commutateur 13.

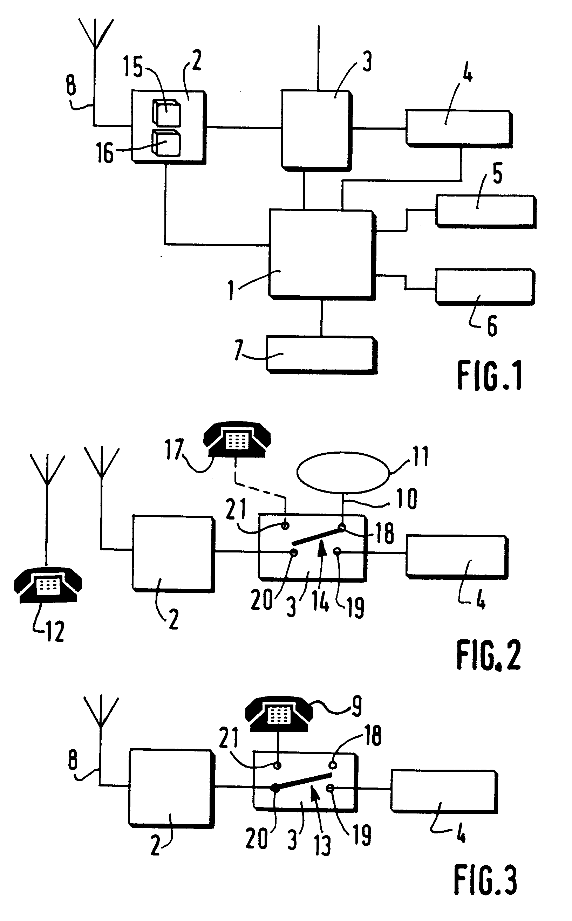

En mode base (figure 2), le bloc d'aiguillage est relié à une ligne 10, d'un réseau téléphonique 11, que le bloc d'aiguillage 3, par l'intermédiaire d'un commutateur 14 et du processeur 1, peut commuter soit sur le module radio 2, soit sur le modem 4, soit sur un éventuel poste filaire associé 17. Quand la ligne 10 est reliée au module radio 2, le système fonctionne comme une base de téléphonie sans fil pour le poste téléphonique sans fil associé 12 ; quand la ligne 10 est reliée au modem 4, le système fonctionne comme un télécopieur classique.

Schématiquement, le bloc d'aiguillage 3, qui est aussi une interface ligne, comporte, commandés par le processeur 1, les commutateurs 13 et 14, pour relier respectivement la borne 20, à l'une des bornes 19 et 21, et, la borne 18, à l'une des bornes 19, 20 et 21.

Le module émetteur-récepteur radio 2 comporte deux générateurs de fréquence (15, 16) pour la mise en oeuvre, par l'intermédiaire du processeur 1, du protocole de signalisation de la norme CT0.

Pour la mise en oeuvre du protocole de signalisation de la norme CT2, un seul des deux générateurs est utilisé, I'émission et la réception s'effectuant, grâce au processeur 1, sur deux canaux temporels différents. Au plan fonctionnel, le module radio est donc constitué de l'émetteur-récepteur 2 et du processeur 1.

Quand on change de mode d'utilisation du système, du mode combiné en mode base ou l'inverse, en signalisation normalisée CT0, on permute les sorties des deux générateurs de fréquences 15, 16 et, en signalisation normalisée CT2, on permute les réglages des canaux de l'émetteur en usage.

## Revendications

1. Système de télécopie, comprenant un processeur (1), un bloc d'aiguillage (3), relié au processeur et agencé pour être relié à une ligne (10) d'un réseau téléphonique (11) et à un combiné téléphonique associé (9,12), un modem (4), relié au processeur (1) et au bloc d'aiguillage (3), un ensemble d'analyse et d'impression (5, 6) et un pupitre de commande (7), reliés au processeur (1), caractérisé par le fait qu'il comporte un module radio réversible (2), relié au bloc d'aiguillage (3) et au processeur (1) et agencé pour communiquer par liaison sans fil soit, en mode combiné, avec une base de téléphonie sans fil reliée à la ligne téléphonique, le combiné associé (9) étant relié au bloc d'aiguillage (3), soit, en mode base, avec le combiné associé (12), le bloc d'aiguillage (3) étant alors relié à la ligne téléphonique (10).

2. Système selon la revendication 1, dans lequel, en mode combiné, le bloc d'aiguillage (3) peut relier le module radio (2) au modem (4) ou au combiné téléphonique associé (9).

3. Système selon l'une des revendications 1 et 2, dans lequel, en mode base, le bloc d'aiguillage (3) peut relier la ligne téléphonique (10) soit au module radio (2), pour assurer avec le processeur (1) la fonction téléphonie d'une base sans fil pour le combiné associé (12), soit au modem (4), pour assurer la fonction télécopie.

4. Système selon l'une des revendications 1 à 3, dans lequel le module radio (2) comporte deux générateurs de fréquences (15, 16) et le processeur (1) est agencé pour, sous la commande du pupitre (7), faire fonctionner l'un des deux générateurs en émission et l'autre en réception, pour la mise en oeuvre d'un protocole de signalisation de la norme CT0.

5. Système selon la revendication 4, dans lequel le processeur (1) est agencé pour, sous la commande du pupitre (7), faire fonctionner l'une des deux générateurs en émission, sur un canal, et en réception, sur un autre canal, pour la mise en oeuvre d'un protocole de signalisation de la norme CT2.

6. Système selon l'une des revendications 1 à 3, dans lequel le module radio comporte un unique générateur de fréquence et le processeur (1) est agencé pour, sous la commande du pupitre (7), faire fonctionner le générateur en émission, sur un canal temporel, et en réception, sur un autre canal, pour la mise en oeuvre d'un protocole de signalisation de la norme CT2.

7. Système selon l'une des revendications 1 à 6, dans lequel le processeur (1) est agencé pour permettre, en mode combiné, la scrutation d'une pluralité de bases de téléphonie sans fil et, en mode base, la scrutation d'une pluralité de combinés sans fil.
